**Europäisches Patentamt**

**European Patent Office**

**Office européen des brevets**

(19)

(11) Veröffentlichungsnummer : **0 380 718 B1**

## (12) EUROPÄISCHE PATENTSCHRIFT

(45) Veröffentlichungstag der Patentschrift :
**15.04.92 Patentblatt 92/16**

(51) Int. Cl.$^5$ : **B62D 53/08,** B62D 53/12

(21) Anmeldenummer : **89101519.0**

(22) Anmeldetag : **28.01.89**

(54) **Sattelkupplung.**

(43) Veröffentlichungstag der Anmeldung :
**08.08.90 Patentblatt 90/32**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI LU NL SE**

(56) Entgegenhaltungen :
**DE-B- 1 277 035**
**US-A- 2 513 117**
**US-A- 2 619 359**
**US-A- 3 352 571**

(73) Patentinhaber : **Hunger, Walter, Dr.-Ing.**
**Otto-Nagler-Strasse 13**
**W-8700 Würzburg (DE)**

(72) Erfinder : **Hunger, Walter, Dr.-Ing.**
**Otto-Nagler-Strasse 13**
**W-8700 Würzburg (DE)**

(74) Vertreter : **Nix, Frank Arnold, Dr.**
**Kröckelbergstrasse 15**
**W-6200 Wiesbaden (DE)**

## Beschreibung

Die vorliegende Erfindung bezieht sich auf eine Sattelkupplung zur Verbindung eines Sattelaufliegers (Sattelanhängers) mit einem Zugfahrzeug. Aus der Patentschrift US-A-3 352 571 ist eine Sattelkupplung bekannt, bei der der Königszapfen des Sattelaufliegers von einer Verriegelungskinematik des Zugfahrzeugs gehalten ist, deren Schließelemente zwei symmetrische, schwenkbar angelenkte Schließbacken sind, in deren jeder eine Halbkreisausnehmung zum Erfassen des Königszapfens ausgeführt ist und die zwischen einer den Königszapfen freigebenden Öffnungsstellung und einer den Königszapfen erfassenden Verriegelungsstellung hin und her schwenkbar sind. Ein Vorteil dieser Ausbildung sind die großen Berührungsflächen Schließbackenden mit dem Königszapfen, sodaß dort nur geringe Flächenpressungen auftreten und der Verschleiß entsprechennd gering bleibt.

Die großflächige Berührung zwischen Schließbacken und Königszapfen hat den Charakter einer Lagerung des Königszapfens, wobei jedoch die sich in der Scließlage der Schließbacken zu einer Lagerschale zusammenfügenden Halbkreisausnehmungen der Schleißacken ein gewisses Spiel gegenüber dem Königszapfen behalten müssen, weil sie entsprechend dem Wechsel der Sattelauflieger mit einer Vielzahl von verschiedenen Königszapfen zusammenwirken müssen. Außerdem kann, insbesondere beim Aufsatteln, leicht Schmutz auf die gegeneinander gleitenden Flächen gelangen, was dann doch wieder zu einem gewissen Verschleiß führen kann.

Aufgabe der vorliegenden Erfindung ist die Verbesserung der zum Stand der Technik gehörenden Sattelkupplung in er Weise, daß die beim Schwenken des Sattelaufliegers gegenüber dem Zugfahrzeug gegeneinander gleitenden Flächen spielfrei gepasst sein können und vor dem Eindringen von Schmutz geschützt sind. Dadurch sollen die Fahrbedingungen verbessert werden und die Verschleißfestigkeit und Wartungsfreiheit erhöht werden.

Die Lösung der gestellten Aufgabe gelingt durch die in den Patentansprüchen angegebenen Ausbildungen.

Die Erfindung wird nachfolgend durch die Beschreibung von Ausführungsbeispielen anhand der beigegebenen Zeichnungen weiter erläutert. Es zeigt

Fig. 1 eine Unteransicht der Kupplungsplatte mit der Verriegelungskinematik für den Königszapfen,

Fig. 2 den Schnitt nach Linie II-II von Fig. 1,

Fig. 3 die Verriegelungskinematik vergrößert in geschlossener Stellung,

Fig. 4 die Verriegelungskinematik gemäß Fig. 3 in der geöffneten Stellung,

Fig. 5 den Längsschnitt durch ein in die Schließbacken eingebautes Gleitlager,

Fig. 6 den Querschnitt gemäß Linie VI-VI von Fig. 5,

Fig. 7 den Längsschnitt durch ein in die Schließbacken eingebautes Wälzlager,

Fig. 8 den Querschnitt gemäß Linie VIII-VIII von Fig. 7.

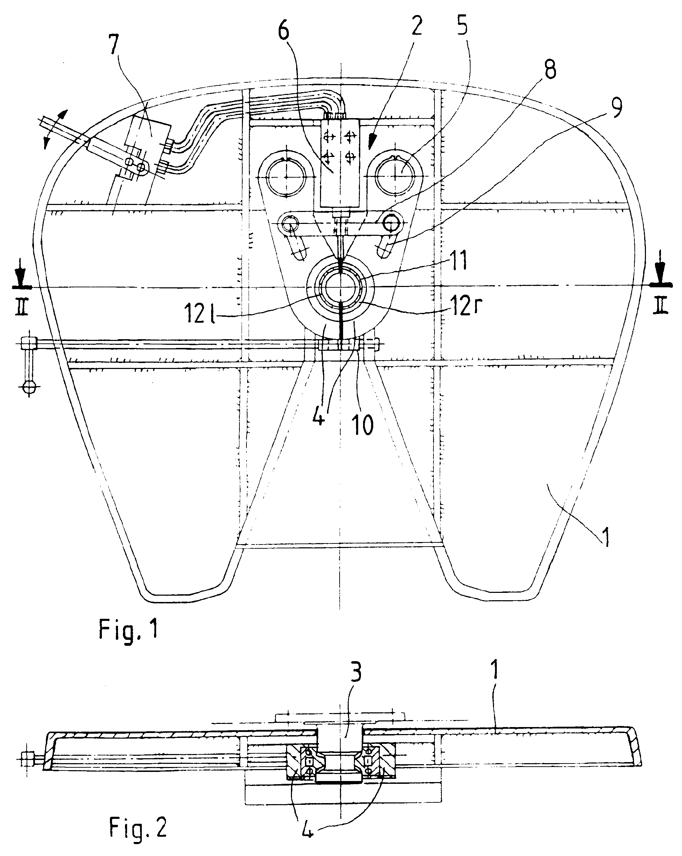

Fig. 1 zeigt die Unterseite der Kupplungsplatte 1 mit der Verriegelungskinematik 2 für den Königszapfen 3 des Sattelaufliegers. Diese Verriegelungskinematik besteht im wesentlichen aus zwei symmetrisch zur Längsebene angeordneten Schließbacken 4, die mittels Gelenkbolzen 5 schwenkbar an der Kupplungsplatte 1 gehalten sind, und einem sie betätigenden Hydraulikzylinder 6. Dieser wird von einer Handpumpe 7 beaufschlagt und beim Ausfahren seiner Kolbenstange verschiebt sich eine an dieser befestigte Querstange 8 nach hinten, an deren Enden Gleitsteine befestigt sind, die in Gleitnuten 9 der Schließbacken 4 gleiten, wodurch diese auseinander geschwenkt werden. Eine handbetätigte mechanische Verriegelungsklammer 10 gewährleistet die geschlossene Lage der Schließbacken 4.

Im hinteren Ende der nach hinten weisenden Schließbacken 4 ist je eine halbkreisförmige Ausnehmung 11 ausgeführt, die sich in geschlossener Stellung der Schließbacken zu einem kreisförmigen Raum ergänzen, in dem ein geteiltes Lager 12 aus zwei Lagerhälften 12 r und 12 l untergebracht ist.

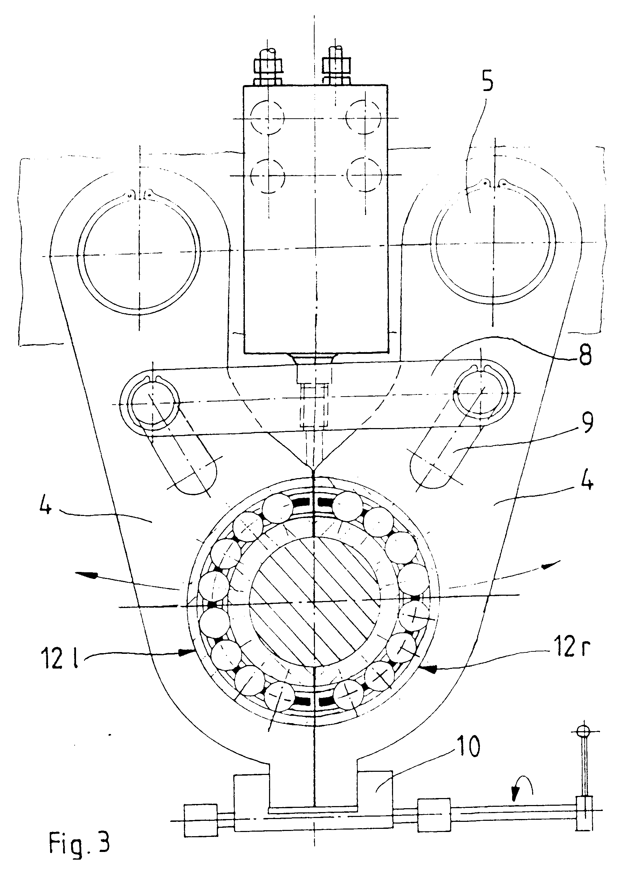

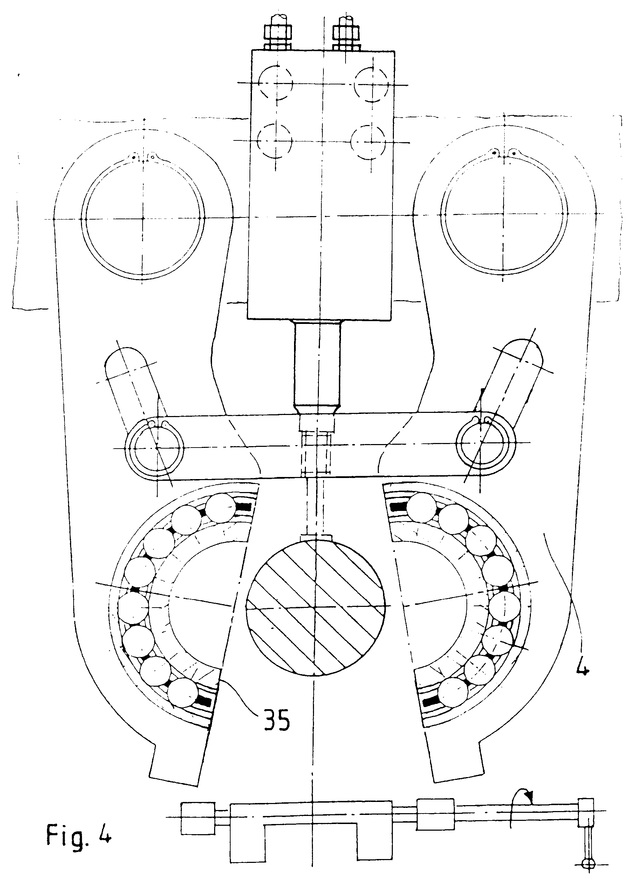

Fig. 3 zeigt die Schließbacken in geschlossener und durch die Verriegelungklammer 10 gesicherter Stellung; Fig. 4 zeigt die geöffnete Stellung. In beiden Fällen befinden sich die Innenringhälften des gezeigten Wälzlagers in ihrer ausgerichteten Drehlage, in der ihre Schnittflächen 35 mit den in geschlossener Lage der Schließbacken 4 in der Teilungsebene liegenden Stoßflächen der Schließbacken 4 fluchten.

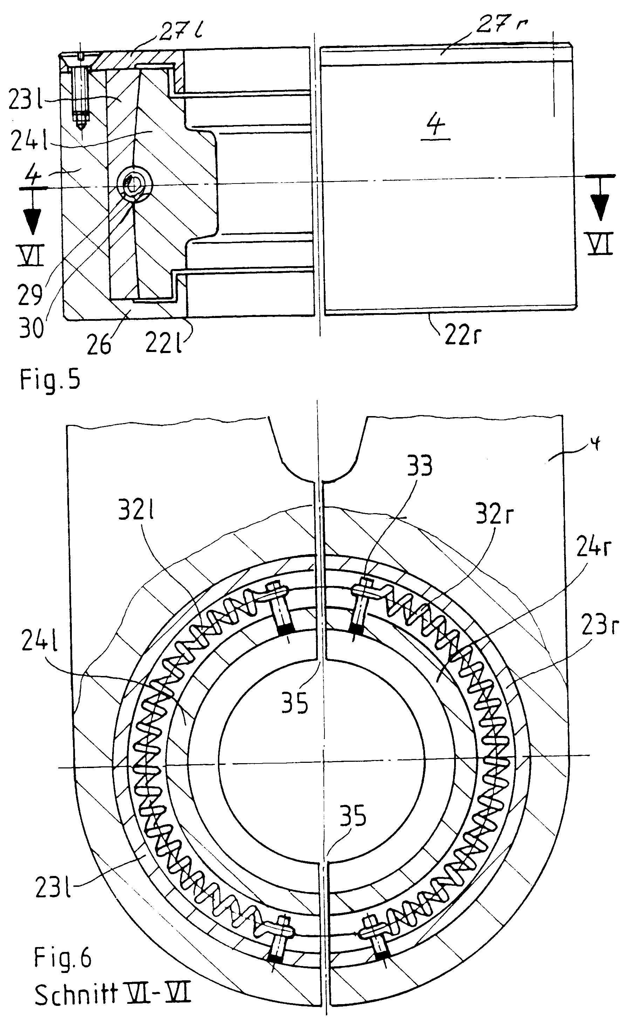

Im einfachsten Fall ist das geteilte Lager 12 gemäß Fig. 5 und 6 ein Gleitlager 22 mit einer Aussenschale 23 und einer Innenschale 24. Jede Lagerhälfte 22 l und 22 r besteht aus einer Außenschalenhälfte 23 l und 23 r und einer Innenschalenhälfte 24 l und 24 r wobei in der in Fig. 6 gezeigten ausgerichteten Drehlage derselben diese vollständig innerhalb der zugehörrigen Außenschalenhälften liegen und von diesen umfaßt sind.

Die Außenschalenhälften 23 l und 23 r sind auf geeignete Weise in der jeweiligen Schließbacke 4 befestigt, zum Beispiel dadurch, daß jede Schließbacke 4 längs des Randes ihrer Halbkreisausnehmung 11 an einer ihrer Flächen einen radialen Einsprung 26 hat, von dessen radial innerem Rand nochmals ein Vorsprung in Axialrichtung einwärts ragt, sodaß der Einsprung im Längsschnitt die auf Fig. 5 ersichtliche Hakenform hat. Diese hintergreift den Rand der Innenschalen 24 l, 24 r. An der anderen Fläche der Schließbacken 4 sind entsprechend gestaltete Ringdeckelhälften 27 l, 27 r aufgeschraubt, welche durch ihre hakenartige Längsschnittform den anderen Rand der Innenschale halten. Auf diese Weise bleibt die Innenschale trotz ihrer Teilung in der Diametralebene in zwei Hälften in Position.

In der mittigen Querschnittsebene VI-VI sind in den einander zugewandten Flächen von Außenschale und Innenschale einander gegenüberliegende umlaufende Ausnehmungen 29 und 30 ausgeführt, die sich zu einem toroidalen Kanal ergänzen. In den Kanal 29/30 der Lagerhälfte 22 r ist eine Schraubenfeder 32 r eingelegt. Jedes Federende ist mittels eines Ankerstifts 33 befestigt, und zwar jeweils ein Federende an einer Außenschalenhälfte 23 l, 23 r und das andere Federende an der Innenschalenhälfte 24 l, 24 r der zugehörigen Gleitlagerhälfte 22 l, 22 r. Dabei sind die Befestigungsstellen nahe den einander gegenüberliegenden Schnittflächen 35 der Lagerälften die gleichen, daß heißt die einander benachbarten Enden der verschiedenen Federn sind je weils entweder an der Aussenschale oder der Innenschale verankert, wie dies aus Fig. 6 ersichtlich ist.

Die Federn 32 befinden sich in der aus Fig. 6 ersichtlichen ausgerichteten Drehlage der Innenschale 224 in der Außenschale 23 in ungespanntem Zustand. Bei einer Drehbewegung der Innenschale gegenübber der Außenschale wird mithin eine Feder auf Zug und die andere auf Druck beansprucht; beispielsweise wird bei einer Drehbewegung der Innenschale nach rechts (im Uhrzeigersinn) die Feder 32 l gelängt und die Feder 32 r gestaucht. Der in beiden Federn entstehende Spannungszustand strebt danach, die Innenschalenhälften 24 l, 24 r aus der ausgelenkten Drehlage wieder in die ausgerichtete Lage zu drehen.

Damit bei den Auslenkungs-Drehbewegungen der Innenschale ein einwandfreies Hineinlaufen des Schnittflächenendes der Innenschalenhälften in die Außenschalenhäfte der jeweils anderen Lagerhälfte gewährleistet ist, können die jeweiligen Lagerflächen in Randzone auf einer kurzen Erstreckung rampenartig geneigt und-/oder gerundet sein.

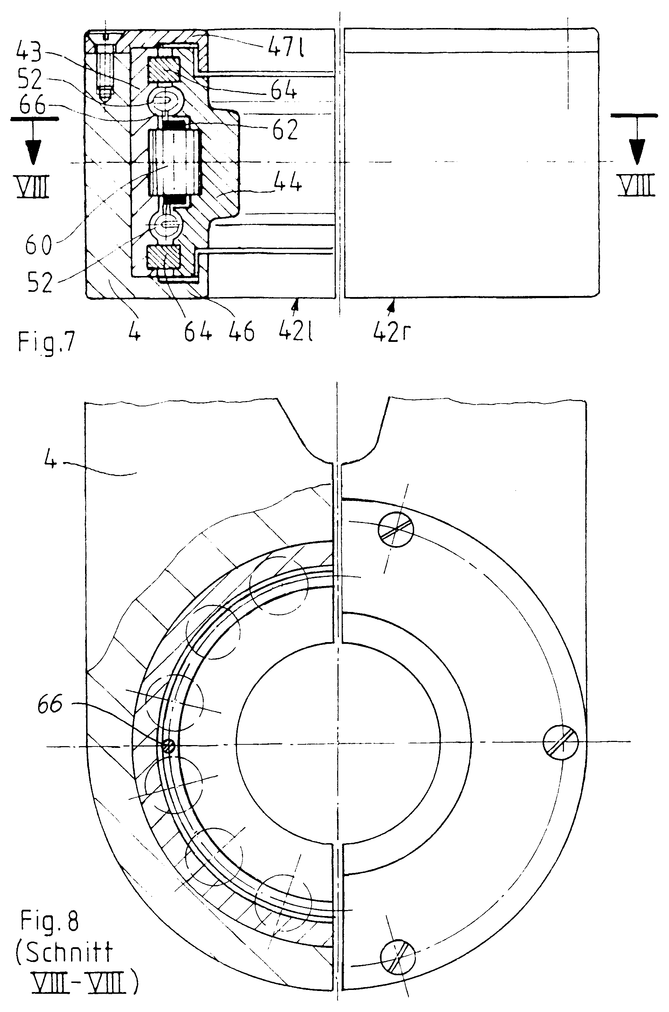

Das geteilte Lager 12 kann gemäß Fig. 7,8 auch als Wälzlager, zum Beispiel als Rollenlager, ausgebildet sein, wie dies auch in Fig. 3 und 4 angedeutet ist. Auch in dieser Ausbildung ist jede Lagerhälfte 42 r, 42 l in die Ausnehmung 11 der jeweiligen Schließbacke eingesetzt, die im Längschnitt ähnlich den Schließbacken gemäß Fig. 5,6 ausgebildet ist und einen hakenförmigen radialen Vorsprung 46 sowie einen angeschraubten geteilten Ringdeckel 47 entsprechender Längsschnittsgestaltung hat.

Von dieser Konstruktion sind die Hälften des eigentlichen Rollenlagers gehalten, welches besteht aus einem Außenring 43, einem Innenring 44, dessen Innenfläche zum Erfassen des Königszapfens 3 geformt ist und den zwischen diesen verteilten Rollen 60, die in einem Käfig 62 gehalten sind. Der Außenring 43, der Innenring 44 und der Käfig 62 sind in entsprechende Hälften geteilt.

Bei dieser Ausbildung sind rückstellende Schraubenfedern 52 ähnlich wie die Federn 32 vorgesehen und angeschlossen, und zwar hier in zwei Ebenen beidseits der Rollen 60, so daß also an jeder Außenringhälfte und an jeder Innenringhälfte zwei Federn 52 angreifen.

Der Ringraum zwischen den Lagerringen ist beidseits abgeschlossen durch je einen geteilten Ring 64 aus gehärtetem Stahl, der in einander gegenüberliegende Nuten von Innenring und Außenring ragt und in der Nut des Innenrings 44 fest eingepreßt ist und in der Nut des Außenrings 43 gleitet. Diese Ringe 64 nehmen auch eventuell auf den Lagerinnenring 44 wirkende Axialbeanspruchungen auf.

Während die Federn 52 mit ihren Enden in der anhand der Gleitlagerausbildung beschriebenen Weise an den Außenringhälften und den Innenringhälften befestigt sind, sind sie bei der betrachteten Rollenlagerausbildung zusätzlich mittels eines Stegs 66 mit der jeweiligen Rollenkäfighälfte 62 l, 62 r verbunden, und zwar in der Mitte ihrer Erstreckung, daß heißt in der Schnittebene von Fig. 7. Diese mittige Stelle der Federn bewegt sich bei Auslenkungen um etwa die Hälfte des Wegs des ausgelenkten Federendes, was der Bewegung entspricht, die der Rollenkäfig 62 bei Auslenkungen des Innenrings 44 ausführt. Auf diese Weise suchen die Federn 52 sowohl die Innenringhälften 44 l, 44 r als auch die Käfighälften 62 l, 62 r ihre jeweilige ausgerichtete Lage zurückzustellen. Bezüglich der Käfighälften ist dies eine Vorsichtsmaßnahme, da an sich der Käfig einer Rückstellbewegung des Innenrings in die Ausgangslage folgen müßte, was aber durch im Fahrbetrieb auftretenden Schlupf in Frage gestellt sein kann.

Die beschriebene Sattelkupplung funktioniert in gleicher Weise wie die eingangs genannte, zum Stand der Technik gehörende Sattelkupplung. Der Unterschied liegt darin, daß auf der Oberfläche des Königszapfens 3 keine Gleitreibung stattfindet, sonder diese entweder ins Innere eines weitgehend gekapselten Gleitlagers verlegt ist oder sogar ersetzt ist durch das Abwälzen von Wälzlagerkörpern zwischen einem Außenring und einem Innenring. In beiden Fällen ist die Verbindung zwischen Königszapfen des Sattelaufliegers und Kupplungsplatte der Zugmaschine eine besonders präzise; sie ist dabei reibungsarm, verschmutzungsgeschützt und weitgehend verschleiß - und wartungsfrei.

EP 0 380 718 B1

**Patentansprüche**

1. Sattelkupplung zur Verbindung eines Sattelaufliegers mit einem Zugfahrzeug mit den Königszapfen (3) des Sattelaufliegers in der Verriegelungsstellung formschlüssig ergreifenden, symmetrischen, schwenkbar angelenkten Schließbacken (4) mit Halbkreisausnehmungen (11) für den Königszapfen, dadurch gekennzeichnet, daß in der Halbkreisausnehmmung (11) jeder Schließbacke (4) ein halber Lagerinnenring (24 l, 24 r; 44 l, 44 r) gehalten ist, an dem ein Rückstellelement (32; 52) angreift, das ihn in seine ausgerichtete Stellung zu drehen sucht.

2. Sattelkupplung nach Anspruch 1, dadurch gekennzeichnet, daß der Lagerinnenring (24; 44) gehalten ist durch einen hakenförmgen radialen Einsprung (26, 46) dihner umgebenden Schließbacke (4) oder enes ihn ungebenden Gehäuses (445) oder seiner Außenschale (23), der seine stirnseitigen Ränder umgreift.

3. Sattelkupplung nach Ansprüchen 1 oder 2, dadurch gekennzeichnet, daß das Rückstellelement jeder Lagerhälfte (12) eine Schraubenfeder (32; 52) ist, die in einen Raum zwischen dem Innenring (224; 44) und dem Außenring (23; 43) eingelegt ist und mit einem Ende am Innenring und mit dem anderen Ende am Außenring angreift.

4. Sattelkupplung nach Anspruch 3, dadurch gekennzeichnet, daß der Unterbringungsraum der Feder (32) durch eine umlaufende Ausnehmung (29, 30) gebildet ist, die in wenigstens einem der Ringe (Außenschale 23 oder Innenschale 24) ausgeführt ist.

5. Sattelkupplung nach einem oder mehreren der vorhergehenden Ansprüche, dadurch gekennzeichnet, daß das Lager (12) ein Gleitlager (22) ist.

6. Sattelkupplung nach Anspruch 5, dadurch gekennzeichnet, daß die Außenschalen (23) des Gleitlagers in den und einstückig mit den Schließbacken (4) ausgeführt sind.

7. Sattelkupplung nach einem oder mehreren der Ansprüche 1 bis 4, dadurch gekennzeichnet, daß das Lager (12) ein Wälzlager (42) ist, dessen Wälzkörperkäfig (62) in der gleichen Ebene geteiilt ist wie der Außenring (43) und der Innenring (44).

8. Sattelkupplung nach Anspruch 7, dadurch gekennzeichnet, daß an jeder Ringhälfte (42 l, 43 r; 44 l, 44 r) zwei Rückstellfedern (52) angreifen, die sich beidseits der Reihe der Wälzkörper (60) erstrecken.

9. Sattelkupplung nach Ansprüchen 7 und/oder 8, dadurch gekennzeichnet, daß jede Rückstellfeder (52) in der Mitte ihrer Erstreckung mit dem neben ihr gelegenen Wälzkörperkäfig (62) verbunden ist.

10. Sattelkupplung nach einem oder mehreren der Ansprüche 7 bis 9, dadurch gekennzeichnet, daß nahe den Stirnflächen der Lagerringe (43, 44) zwischen diesen ein geteilter Ring (64) aus gehärtetem Stahl eingesetzt ist, der mit seinem radial außen liegenden Rand in eine Nut des Außenrings (43) und mit seinem radial innen liegenden Rand in eine Nut des Innenrings (44) greift.

**Claims**

Saddle coupling for connecting a semi-trailer with a traction vehicle, the saddle coupling having symmetrical closing jaws (4), which are articulated in a pivotable manner and grip the king pin (3) of the semi-trailer in the locking position in a form-closing manner, with semicircular recesses (11) for the king pin, characterid in that there is held in the semicircular recess (11) of each closing jaw (4) half an inner bearing ring (24 l, 24 r; 44 l, 44 r) on which a restoring element (32; 52) acts, seeking to turn it into its aligned position.

2. Saddle coupling according to claim 1, characterised in that the inner bearing ring (24; 44) is held by a hook-shaped radial contraction (26, 46) of the closing jaw (4) which surrounds it or of a housing (45) which surrounds it or of its outer shell (23), embracing its front edges.

3. Saddle coupling according to claims 1 or 2, characterised in that the restoring element of each bearing half (12) is a helical spring (32; 52) which is inserted into a space between the inner ring (24; 44) and the outer ring (23; 43) and acts with one end on the inner ring and with the other end on the outer ring.

4. Saddle coupling according to claim 3, characterised in that the space for accommodating the spring (32) is formed by a circumferential recess (29, 30) which is constructed in at least one of the rings (outer shell 23 or inner shell 24).

5. Saddle coupling according to one or several or the preceding claims, characterised in that the bearing (12) is a sliding bearing (22).

6. Saddle coupling according to claim 5, characterised in that the outer shells (23) of the sliding bearing are constructed in the closing jaws (4) and in one piece therewith.

7. Saddle coupling according to one or several of the claims 1 to 4, characterised in that the bearing (12) is a rolling bearing (42), the rolling element cage (62) of which is divided in the same plane as the outer ring (43) and the inner ring (44).

8. Saddle coupling according to claim 7, characterised in that there act on each ring half (42 1, 43 r; 44 1, 44 r) two restoring springs (52) which extend on both sides of the row of the rolling elements (60).

9. Saddle coupling according to claims 7 and/or 8, characterised in that each restoring spring (52) is connected in the centre of its extension with the rolling element cage (62) which is placed near it.

10. Saddle coupling according to one or several of the claims 7 to 9, characterised in that inserted close to the faces of the bearing rings (43, 44) between the latter there is a divided ring (64) of hardened steel which engages with its radially outer edge into a groove of the outer ring (43) and with its radially inner edge into a groove of the inner ring (44).

**Revendications**

Attelage à sellette pour l'accouplement d'une semi-remoque à un tracteur comportant des mâchoires (4) montées avec possibilité de pivotement et disposées symétriquenent qui bloquent par complémentarité de formes le pivot maître (3) en position de verrouillage et qui comportent des évidements semi-circulaires (9) pour saisir le pivot maître (3), caractérisé en ce que, dans l'évidement semi-circulaire (11) de chacune dess mâchoires (4), est montée une demie bague intérieure de palier (24l, 24r; 44l, 44r) sur laquelle agit un élément de rappel (32, 52) qui tend à ramener ladite bague dans sa position alignée.

2. Attelage à sellette selon la revendication 1, caractérisé en ce que la bague intérieure de palier (24, 44) est tenue par une partie rentrante radiale en forme de crochet (26, 46) de la mâchoire (4) qui l'entoure ou d'un corps (45) qui l'entoure ou de son enveloppe extérieure (23) qui serre ses bords frontaux.

3. Attelage à sellette selon les revendications 1 ou 2, caractérisé en ce que l'élément de rappel de chaque demi palier (12) est un ressort hélicoïdal (32; 52) qui est monté dans un espace entre la bague intérieure (24; 44) et la bague extérieure (23; 43) et qui agit par une extrémité sur la bague intérieure et par l'autre extrémité sur la bague extérieure.

4. Attelage à sellette selon la revendication 3, caractérisé en ce que la chambre de montage du ressort (32) est formée par un évidement circulaire (29, 30) qui est aménagé dans l'une au moins des bagues (bague extérieure 23 ou bague intérieure 24).

5. Attelage à sellette selon une ou plusieurs des revendications précédentes, caractérisé en ce que le palier (12) est un palier lisse (22).

6. Attelage à sellette selon la revendication 5, caractérisé en ce que les bagues extérieures (23) du palier lisse sont réalisées dans les mâchoires (4) et d'une pièce avec elles.

7. Attelage à sellette selon une ou plusieurs des revendications 1 à 4, caractérisé en ce que le palier (12) est un palier à roulement (42) dont la cage (62) est divisée dans le même plan que la bague extérieure (43) et la bague intérieure (44).

8. Attelage à sellette selon la revendication 7, caractérisé en ce que sur chaque demie bague (43l, 43r; 44l, 44r) agissent deux ressorts de rappel (52) qui s'étendent de part et d'autre de la rangée de corps de roulement (60).

9. Attelage à sellette selon les revendication 7 et/ou 8, caractérisé en ce que chaque ressort de rappel (52) est lié, au milieu de sa longueur, à la cage (62) située à proximité de celui-ci.

10. Attelage à sellette selon une ou plusieurs des revendications 7 à 9, caractérisé en ce qu'une bague en plusieurs parties (64) en acier trempé est montée à proximité des faces frontales des bagues de palier (43, 44), entre celles-ci, laquelle bague s'engage, par son bord situé radialement à l'extérieur, dans une gorge de la bague extérieure (43) et, par son bord situé à l'intérieur, dans une gorge de la bague intérieure (44).

Fig. 1

Fig. 2

Fig. 3

Fig. 4

35

4

Fig.5

Fig.6
Schnitt VI-VI

**Fig.7**

43
52
66

VIII

60
52

4   64   46   42l      42r

471
64
62
44

**Fig. 8
(Schnitt
VIII–VIII)**

4

66